# EUROPEAN PATENT APPLICATION

(11) **EP 0 933 059 A2**
(43) Date of publication of application: **04.08.1999**
(21) Application number: 98122582.4
(22) Date of filing: 03.12.1998
(51) Int. Cl.: A47L 23/22, A47L 23/26

(54) **Multistep building entryway barrier floor covering combination**

(30) Priority: 11.12.1997 US 989091
(71) Applicant: MILLIKEN RESEARCH CORPORATION, Spartanburg South Carolina 29304 (US)
(72) Inventor: Nord, Thomas D., Newnan, GA 30263 (US); Rockwell, James N., Jr., LaGrange, GA 30240 (US)
(74) Representative: Behrens, Dieter, Dr.-Ing.

(57) **Abstract**

A combination of at least three floor or ground covering articles, A, B, and C, for placement in and around the entryway of a building is disclosed which provides more effective cleaning ability for pedestrians' footwear, thus better ensuring the inside of the building itself remains clean. Article C comprises 100% coarse monofilament carpet yarn, B comprises a lower degree of such coarse yams than C, and A has a lower degree of such yarns than B. Preferably, such articles are arranged in a manner in which article C necessarily is located outside the building and comprises 100% heavy denier coarse monofilament carpet yarn, article A necessarily is located inside the building and comprises from about 10 to about 20% heavy denier coarse monofilament carpet yarn and from about 80 to about 90% fine denier carpet yarn, and article B, which may be placed either outside the building, at a location nearer the building than article C, or inside the building, at a location nearer the entryway of the building than article A, comprises from about 30 to about 60% heavy denier coarse monofilament carpet yarn and from about 40 to about 70% fine denier monofilament carpet yarn. An alternative arrangement for a building having an airlock-type vestibule configuration is also contemplated.

## Description

### Field of the Invention

This invention relates to a combination of floor coverings arranged in and around an entryway to a building in order to provide effective moisture, dirt, and debris removal from the footwear of pedestrians entering such a building. More particularly, this combination comprises at least three floor covering articles placed inside and outside an entryway of a building and having reduced amount of coarse filament the closer to and further inside the entryway such articles are placed. An alternate arrangement involving a building having an airlock-type vestibule configuration is also provided.

### Discussion of the Prior Art

Floor mats have long been utilized to facilitate the cleaning of the bottoms of people's shoes. Moisture, dirt, and debris from out of doors easily adhere to such footwear, particularly in inclement weather and particularly in areas of grass or mud or the like. Such unwanted and potentially floor staining or dirtying objects need to be removed from a person's footwear prior to entry indoors. In response, floor mats, in particular those having a tufted carpet pile comprised solely of coarse filaments, were developed which provide an easy manner of cleaning the soles of a person's shoes simply by scraping the footwear against such a stiff article. Examples of such floor mats are exemplified in U. S. Patents 1,008,618, to Skowronski et al., 4,045,605, to Breens et al., and 4,353,944, to Tarui, as well as French Patent No. 1,211,755, assigned to Cosyntex (S.A.) and PCT Application 95/30040, assigned to Kleen-Tex Industries, Inc.

Further improvements over the basic all-coarse filaments mats included interspersed coarse and fine carpet pile yarns, either in stripe or checkerboard patterns, as taught by U. S. Patents 4,820,566 and 5,055,333, both to Heine et al., or in separate regions of the same article, as in Tarui, above. One notable development is found in U. S. Patent 2,599,049, to Dollinger. This reference teaches an inside vestibule mat having three separate regions of decreasing amounts of coarse filament. Also integral within this article are a heating system for drying the moisture, mud, etc., on the floor mat, and a drawing exhaust system beneath the mat for removing such dried matter from the mat without the need of displacing the mat itself. All of the aforementioned patents documents are incorporated herein by reference. Nowhere in the prior art is a system of three separate floor covering articles disclosed or fairly suggested which must be placed in specific locations relative to a building's entryway, which have specific amounts of coarse and/or fine carpet pile yarns, and which are removable from their respective building locations for industrial wash processing.

Therefore, a need exists for an improved, easily laundered or cleaned, effective moisture, dirt, and debris removal entry barrier combination.

### Description of the Invention

It is thus an object of this invention to provide a building entry barrier combination of at least three floor or ground covering articles having decreasing degrees of coarse filament carpet pile compositions relative to each article's placement from further to nearer to within the building entryway. Furthermore, it is an object of the invention to provide a multistep entry barrier system which comprises easily removable and easily launderable floor covering articles. Still a further object of this invention is to provide a series of footwear scraping articles which more easily and more thoroughly removes moisture, dirt, and debris from a persons shoes. Yet another object of the invention is to provide an entry barrier combination of floor covering articles as noted above wherein one article is located outside an entry of a building, one is located inside an airlock-type entry vestibule but outside the main part of a building, and one article is located just inside the airlock-type entry vestibule of a building.

The term building pursuant to this invention encompasses such structures as an office building, hotel, store, apartment complex, house, and the like; basically any man-made structure which requires a relatively heavy amount of pedestrian traffic. The term entryway for this invention simply means the area of ingress and/or egress from such a building. Generally, such an area separates the inside of a building from the outside of a building through the use of a door, which can be of any type (i.e., wooden, glass, revolving, sliding, and the like). Furthermore, such a building may comprise an airlock-type vestibule which is simply an enclosed area between an outer door, which leads to the outside of the building, and an inner door, which leads to the inside of the building. Such outer and inner doors may be, again, any type or make.

The barrier combination of this invention is utilized to facilitate and effectuate the removal of moisture, dirt, and debris from the footwear of pedestrians entering such a building. This combination is arranged in the manner or manners specified below whereupon the shoe-sole cleaning ability of each separate article within this combination diminishes as a pedestrian nears and ultimately enters the building. Each separate article can easily be removed from the floor or ground and can be easily laundered through, preferably, industrial washing processes, although hand washing and any other type of cleaning may be utilized, also.

The inventive combination includes, as noted above, at least three floor or ground covering articles, A, B, and C. These articles are preferably arranged in and around a building entryway wherein the article or articles located outside the entryway have greater amounts of heavy denier coarse monofilament carpet yarns than does the article or articles located inside the entryway. In this manner, more moisture, dirt, and debris can be removed from a person's footwear as such a pedestrian is outside the building stepping on the coarser article, while residual amounts are removed by the less coarser articles leading into and located inside the building. In particular, A is a floor covering placed inside a building entryway, C is a ground covering article placed outside a building entryway, and B is either a floor covering article placed inside the entryway, but closer to the entryway than A, or B is a ground covering article placed outside the entryway, but closer to the entryway than C. Thus, C, having completely tufted pile completely comprising heavy denier coarse monofilament carpet yarn, has a higher percentage of such heavy denier coarse yarn than does B, and B has a higher percentage of such carpet yarn than does A. Preferably, B has completely tufted pile comprising, as merely an example, from about 30 to about 60% tufted heavy denier coarse monofilament carpet yarn and 40 to 70% fine denier carpet yarn, and A has completely tufted pile comprising, for example, from about 10 to about 20% heavy denier coarse carpet yarn and from about 80 to about 90% fine denier carpet yarn. Other additional floor or ground covering articles may be present as long as each additional article has a lower percentage of coarse carpet yarn in the same type of series as set forth above.

Another preferred arrangement is provided when the building entryway includes an airlock-type vestibule configuration. In such a scenario, A is placed inside the building, but not within the vestibule, B is a floor covering article placed inside the vestibule, and C is placed outside the building. In this and the aforementioned preferred arrangement, C is placed directly adjacent to, or within a reasonably close proximity of, the entryway or the outer door, such as between 0 and 6 feet. Preferably, C abuts the outer door itself (i.e., 0 feet away); however, if B is also placed outside the building, then B is preferably abuts the entryway or outer door and C is preferably placed directly adjacent to B. Of course, B may be placed as far away as 6 feet from the entryway or the outer door and C may be placed as far away as 6 feet from B, if desired. Where A is concerned, it is also placed within a reasonably close proximity to the entryway or inner door (0 to 6 feet away), and preferably abuts such an entryway; however, if B is placed inside the entryway, then it is placed within a reasonably close proximity to said inner door, preferably abutting it, and A is placed within a similar distance to B. If B is placed within an airlock-type vestibule, then it may be placed at any distance from either the inner or outer door.

A noticeable benefit of this combination is the ability for the majority of the potential moisture, dirt, and debris from pedestrians' shoes to remain; through removal by the coarser carpet yarn, outside such a building. Since the smaller, residual amounts of such liquids and/or solids would then be removed by the other less coarse mats, the chance of transferring such unwanted matter into the building are thereby reduced. The coarse fibers on each floor covering or ground article must also have the ability to retain the dirt, moisture, and debris removed from pedestrian footwear within the body of the article. In this fashion, the removed and retained matter cannot be transferred to the shoes of a subsequent pedestrian, thus preventing the potential "re-tracking" of moisture, dirt, and debris through the building. A more effective way of cleaning and scraping a pedestrian's shoes as well as ensuring the building's interior will remain clean are thus provided.

Additionally, such a system permits a more pleasing aesthetic effect within a building entryway since myriad patterns and colorations can be utilized on the aforementioned floor or ground covering articles. Furthermore, and as noted above, the floor or ground covering articles are easily removable themselves from their locations so as to be easily laundered or washed. Such a benefit facilitates the cleaning of such floor or ground coverings in order to ensure the aesthetic characteristics desired remain and allows for reduced amounts of residue to be carried by a pedestrian's footwear subsequent to traversing such articles.

The articles A, B, and C are each, in one preferred embodiment, produced in mat form having the requisite flexibility to withstand the aforementioned industrial laundering processes. Such mats are generally comprised of a tufted carpet pile attached to a vinyl, latex, or vulcanized rubber sheet as exemplified in U.S. Patents 3,306,808, to Thompson et al., 4,741,065, to Parkins, 4,886,692, to Kerr et al., 5,227,214, to Kerr et al., 5,240,530, to Fink, and 5,305,565, to Nagahama et al., all hereby entirely incorporated by reference. Such an attachment can be accomplished during the actual vulcanization step, as taught in Nagahama, for example, above, or through the use of an adhesive layer, preferably a polyolefin adhesive, between the carpet pile and the rubber sheet, as disclosed in copending U.S. Patent Application 08/732,866, all such references herein being entirely incorporated by reference. A particularly notable reference is PCT Application 96/37645, to Milliken Denmark, which discloses suitable coarse fiber mat products, herein incorporated by reference.

In another preferred embodiment, B and C are produced in mat form while A is produced in broadloom form. Such a form encompasses extra-wide and long carpets, or, in other words, carpets which are regularly placed wall-to wall in hallways, rooms, and the like. Such broadloom products are manufactured on a extra-wide loom and may be colored through any standard process (i.e., jet-dyeing, immersion, spraying, etc.). Such a floor covering may be applied to a floor with an easily dissolvable adhesive to facilitate its removal therefrom. Also, and to the contrary, such carpet may be cleaned while remaining at its location through the use of any standard, well-known wet-, dry, or steam-cleaning process for carpet. These broadloom products may have backings made from polyvinyl chloride, vinyl, or urethane (which provides improved cushioning).

In yet another preferred embodiment, B and C are produced in mat form while A is produced in tile form. Such a form is exemplified in U.S. Patent 5,545,276, to Higgins, entirely incorporated herein by reference. Carpet tiles of this sort are easily removable and thus can be easily cleaned at a remote location. Furthermore, such a product can be patterned or colored through any well-known process (such as jet-dyeing, etc.) in such a way as to provide a tile or group of tiles which is or are both integral aesthetically to and functionally with the remaining tiles of the particular room, hall, foyer, etc. The preferred embodiment contemplates a single large tile or a group of tiles which appear and match the same pattern as the other carpet tiles but include the requisite amount of heavy denier coarse monofilament carpet yarn while the remaining tiles do not comprise such a heavy denier component. Furthermore, such tile products may have backings made from polyvinyl chloride, vinyl, or urethane (which provides improved cushioning).

Each of the articles A, B, and C can be of any standard size for mats, and A may be of any standard size for broadloom or tile products. More succinctly, if the article is a mat, any size from roughly 2 feet by 2 feet to about 4 feet by 8 feet is preferred. Larger and smaller sizes are also contemplated. If A is a broadloom product, preferably it is of a size from about 2 feet by 3 feet to about 6 feet by 10 feet. Again, other sizes, both larger and smaller are possible. If A is a tile product, each individual tile, from about 18 inches by 18 inches to about 36 inches by 36 inches, may comprise the entire article contemplated. However, groupings of such tiles may be utilized also. For instance, a configuration of 2 tiles in three rows (72 inches by 108 inches) may comprise article A. Generally, the largest grouping of tiles would equal an area total of about 108 inches by 180 inches; smaller areas of tile groupings are thus also contemplated within this invention.

The term denier, as it applies to yarns, refers to the weight of a fiber having a length of 9,000 meters. Heavy, coarse fibers generally have a range of deniers from about 100 to about 5,000 denier per filament ("dpf''). The preferred range is from about 100 to about 2,000 dpf, and most preferred is a range of from about 150 to about 1,000 dpf. Fine fibers generally have a range of deniers from about 0.1 to about 100 dpf, preferably from about 1 to about 50 dpf, and most preferred from about 5 to about 50 dpf The actual yams utilized within this invention for each of the articles A, B, and C are completely tufted on the carpet pile.

The specific heavy denier coarse monofilament carpet yams may be made from polypropylene, polyester, nylon 6, nylon 6,6, or any combinations thereof Preferably, such yarns are made of polypropylene. Such coarse fibers may be formed either of single component filaments or of two-component sheath/core filaments having a core of one material enclosed within a sheath of a second material. The core may be formed of a single filament or of a filamentous yarn and may be coated with thermoplastic materials, such as polyvinyl chloride. The specific fine denier carpet yarns may be made from nylon 6, nylon 6,6, acrylic, regenerated cellulose, wool, polyester, cotton, propylene, or any combinations thereof Preferred are polyester, nylon 6, nylon 6,6, or combinations thereof Both the coarse and fine fibers may be tufted and attached to a carpet backing in any conventional manner, such as those noted in the aforementioned, therein incorporated U.S. Patents to Heine et al. and Higgins et al., and therein incorporated PCT Applications to Kleen-Tex Industries, Inc. and Milliken Denmark.

For articles A and B, the configuration of fine and coarse fibers may be arranged in any pattern. Preferably, such patterns are striped (i.e., one line of coarse fibers running longitudinally from one end of an article to the other end followed by a line of fine fibers following suit, with a repeated pattern of coarse and fine fiber lines). Other preferable and possible patterns include checkerboard, diamond-shapes, and the like; basically, and again, any possible pattern is contemplated as long as the requisite degree of coarseness is retained for each of articles A and B.

### Brief Description of the Invention

FIG. 1 is an aerial view of the inventive barrier combination wherein B is located outside the building entryway.
FIG. 2 is an aerial view of the inventive barrier combination wherein B is located within the building entryway.
FIG. 3 is an aerial view of the inventive barrier combination wherein B is located within an airlock-type vestibule.

While the invention will be described and disclosed in connection with certain preferred embodiments and procedures, it is by no means intended to limit the invention to such specific embodiments and procedures. Rather, it is intended to cover all such alternative embodiments, procedures, and modification thereto as may fall within the true spirit and scope of the invention as defined and limited only by the appended claims.

### Detailed Description of the Drawings and Preferred Embodiment of the Invention

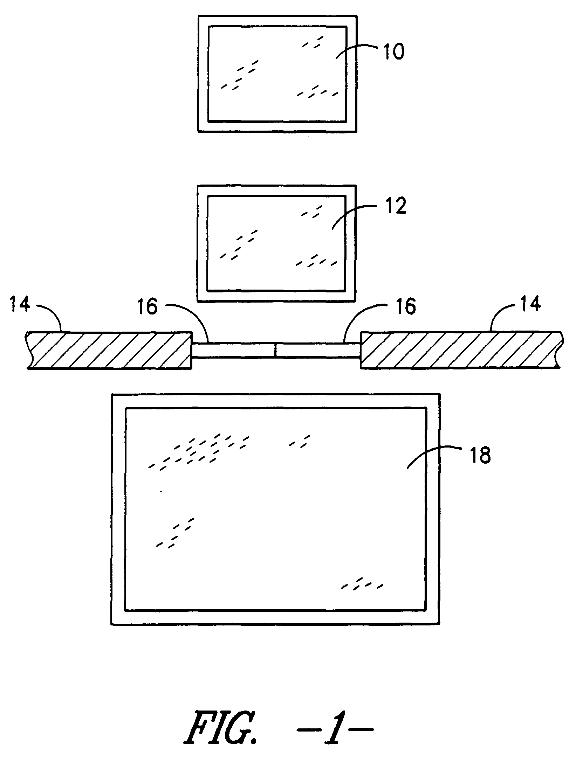

In FIG. 1, a building entryway is shown wherein there is a door **16** and a wall **14**, both of which separate the exterior from the interior of a building (not illustrated). A floor mat **10** (which is article C, above), which comprises 100% tufted heavy denier coarse monofilament carpet yarn (propylene with denier of about 150 dpf), is placed outside the building entryway at a location about 4 feet from the door **16**, further from the door **16** and wall **14** than is floor mat **12** (article B, above), which comprises about 50% heavy denier coarse monofilament carpet yarn (polypropylene with denier of about 150 dpf) and about 50% fine denier carpet yarn (nylon 6,6 with denier of about 1). Article C **10** is thus located about 1 foot from article B **12**, which is about 1 foot from the door **16**. Floor mat **18** (article A, above) which comprises about 10% heavy denier coarse monofilament carpet yarn (polypropylene with denier of about 150 dpf) and about 90% fine denier carpet yarn (nylon 6,6 with denier of about 1), is located within the building entryway, about 1 foot from the door **16**. All of mats **10**, **12**, and **18** are rectangular in shape with mats **10** and **12** having areas of about 2 feet by 3 feet. Mat **18** has a size of about 6 feet by 9 feet.

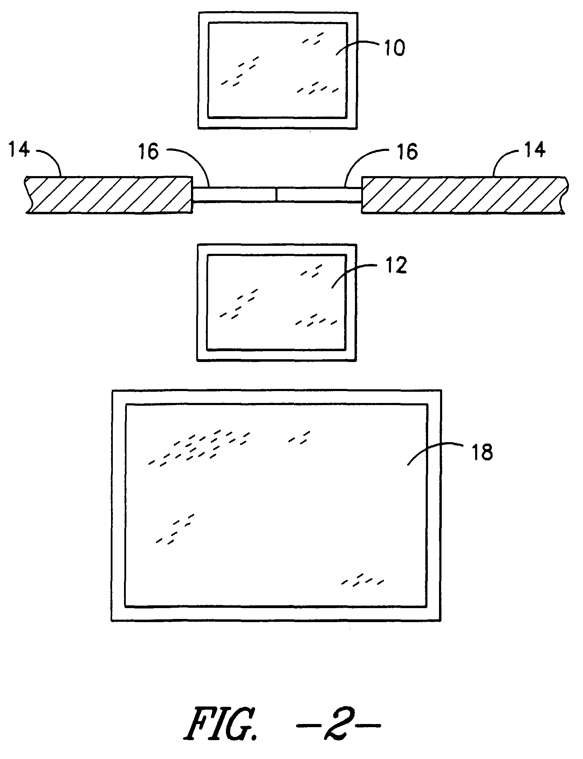

As illustrated in FIG. 2, the mats **10**, **12**, and **18**, having the same dimensions as in FIG. 1, above, are arranged in a configuration wherein mat **12** is located inside the building entryway, about 1 foot from the door **16**, at a location closer to the door **16** and wall **14** than mat **18**, which is about 4 feet from the door **16** and 1 foot from article B **12**.

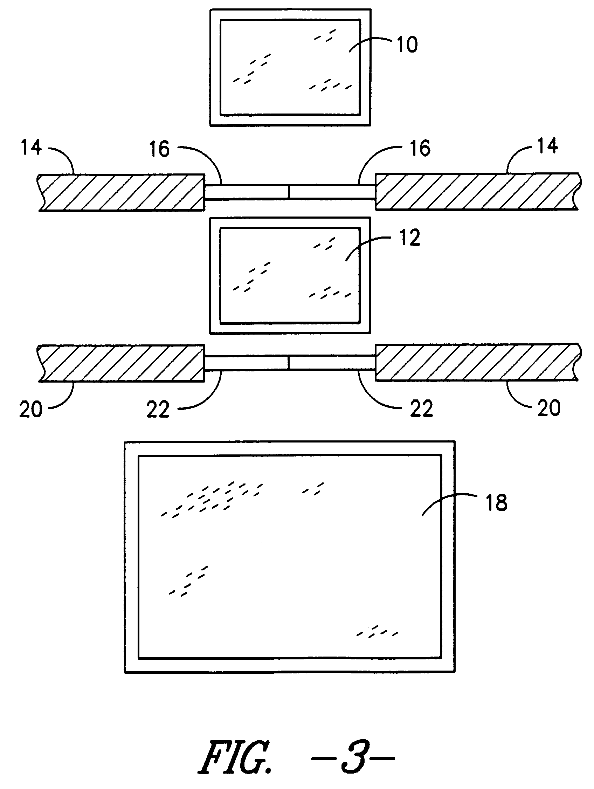

An airlock-type vestibule configuration is illustrated in FIG. 3 wherein article B **12** is located inside a door **16** and a wall **14** but outside another door **22** and another wall **20**. Article B **12** is thus about 6 inches from the outside door **16** and about 6 inches from the inside door **22**. All of mats **10**, **12**, and **18** have the same dimensions as for FIGs. 1 and 2, above. Article C **10** remains at a location outside of the building entryway, about 1 foot away from the door **16**, and article A **18** remains at a location inside of the building entryway, at a location further inside the building than the airlock-type vestibule formed by doors **16** and **22** and walls **14** and **20**, about 1 foot from the door **22**.

It is, of course, to be appreciated that while several potentially preferred embodiments have ben shown and described, the invention is in no way to be limited thereto, since modification may be made and other embodiments of the principles of this invention will occur to those skilled in the art to which this invention pertain. Therefore, it is contemplated by the appended claims to cover any such modifications and other embodiments as incorporate the features of this invention within the true spirit and scope thereof

## Claims

1. A building entryway moisture, dirt, and debris barrier combination comprising at least three separate floor or ground covering articles A, B, and C;
wherein A is placed inside said building entryway, C is placed outside said building entryway, and B is either placed inside said building entryway, at a location closer to said building entryway than A, or outside said building entryway, at a location closer to said building entryway than C;
wherein C is a ground covering mat product comprised of completely tufted carpet pile of 100% heavy denier monofilament carpet yarn and a backing selected from the group consisting essentially of vinyl, rubber, and latex;
wherein B is a floor or ground covering mat product comprised of completely tufted carpet pile having a lower percentage of heavy denier monofilament carpet yarn than C and a backing selected from the group consisting essentially of vinyl, rubber, and latex; and
wherein A is a floor covering mat, broadloom, or tile product comprised of completely tufted carpet pile having a lower percentage of heavy denier monofilament yarn than B and a backing selected from the group consisting essentially of rubber, polyvinyl chloride, vinyl, and urethane.

2. The barrier combination of Claim 1 wherein
B comprises from about 30 to about 60 heavy denier coarse monofilament carpet yarn and from about 40 to about 70% fine denier carpet yarn; and
A comprises from about 10 to about 20% heavy denier coarse monofilament carpet yarn and from about 80 to about 90% fine denier carpet yarn.

3. The barrier combination of Claim 2 wherein A is a mat product having a backing selected from the group consisting essentially of vinyl and rubber.

4. The barrier combination of Claim 2 wherein A is a broadloom product having a backing selected from the group consisting essentially of polyvinyl chloride, vinyl, and urethane.

5. The barrier combination of Claim 2 wherein A is a tile product having a backing selected from the group consisting essentially of polyvinyl chloride, vinyl, and urethane.

6. The barrier combination of Claim 2 wherein B is located inside said building entryway.

7. The barrier combination of Claim 2 wherein B is located outside said building entryway.

8. The barrier combination of Claim 3 wherein A is a mat product having a backing material of rubber.

9. The barrier combination of Claim 4 wherein A is a broadloom product having a backing material of urethane.

10. The barrier combination of Claim 5 wherein A is a tile product having a backing material of urethane.

11. A building entryway moisture, dirt, and debris barrier combination for a building entryway having an airlock-type vestibule configuration comprising at least three separate floor or ground covering articles A, B, and C;
wherein A is placed inside said building entryway and is not placed within said airlock-type vestibule, B is placed within said airlock-type vestibule, and C is placed outside said building entryway;
wherein C is a ground covering mat product comprised of completely tufted carpet pile of 100% heavy denier monofilament carpet yarn and a backing selected from the group consisting essentially of vinyl, rubber, and latex;
wherein B is a floor or ground covering mat product comprised of completely tufted carpet pile having a lower degree of heavy denier monofilament carpet yarn than C and a backing selected from the group consisting essentially of vinyl, rubber, and latex; and
wherein A is a floor covering mat, broadloom, or tile product comprised of completely tufted carpet pile having a lower degree of heavy denier monofilament yarn than B and a backing selected from the group consisting essentially of rubber, polyvinyl chloride, vinyl, and urethane.

12. The barrier combination of Claim 11 wherein
B comprises from about 30 to about 60 heavy denier coarse monofilament carpet yarn and from about 40 to about 70% fine denier carpet yarn; and
A comprises from about 10 to about 20% heavy denier coarse monofilament carpet yarn and from about 80 to about 90% fine denier carpet yarn.

13. The barrier combination of Claim 12 wherein A is a mat product having a backing selected from the group consisting essentially of vinyl and rubber.

14. The barrier combination of Claim 12 wherein A is a broadloom product having a backing selected from the group consisting essentially of polyvinyl chloride, vinyl, and urethane.

15. The barrier combination of Claim 12 wherein A is a tile product having a backing selected from the group consisting essentially of polyvinyl chloride, vinyl, and urethane.

16. The barrier combination of Claim 13 wherein A is a mat product having a backing material of rubber.

17. The barrier combination of Claim 14 wherein A is a broadloom product having a backing material of urethane.

18. The barrier combination of Claim 15 wherein A is a tile product having a backing material of urethane.

19. The barrier combination of Claim 1 wherein the heavy denier coarse monofilament carpet yarns are made of polypropylene having a denier range of from about 100 to about 2,000 dpf.

20. The barrier combination of Claim wherein the heavy denier coarse monofilament carpet yarns are made of polypropylene having a denier range of from about 100 to about 200 dpf.
